## Europäisches Patentamt

## European Patent Office

## Office européen des brevets

(11) Veröffentlichungsnummer: **0 287 046**
**A2**

# EUROPÄISCHE PATENTANMELDUNG

(21) Anmeldenummer: 88105836.6

(22) Anmeldetag: 13.04.88

(51) Int. Cl.4: **F16L 37/28**

(30) Priorität: 15.04.87 DE 3712884

(43) Veröffentlichungstag der Anmeldung:
**19.10.88 Patentblatt 88/42**

(84) Benannte Vertragsstaaten:
**FR GB IT NL**

(71) Anmelder: **SCHWELM ANLAGEN +
APPARATE GMBH
Loher Strasse 1
D-5830 Schwelm(DE)**

(72) Erfinder: **Riché, Robert
Sendentaler Strasse 22
D-4006 Erkrath(DE)**

(74) Vertreter: **Dipl.-Ing. H. Marsch Dipl.-Ing. K.
Sparing Dipl.-Phys.Dr. W.H. Röhl
Patentanwälte
Rethelstrasse 123
D-4000 Düsseldorf(DE)**

(54) **Trennkupplung für Rohr- und Schlauchleitungen.**

(57) Die Erfindung betrifft eine Trennkupplung für Rohr-und Schlauchleitungen (1, 2) mit zwei aneinander gekoppelten Absperrorganen (3, 4), die über eine einseitig angelenkte Schnellverbindung (8) miteinander verbindbar sind, und einer Betätigungseinrichtung (21) zum Schließen der Absperrorgane (3, 4) und Öffnen der Schnellverbindung (8) zeitlich nacheinander, wobei die Betätigungseinrichtung (21) einerseits einen Zylinder (23) mit einer Betätigungsstange, die an einem Hebel (22) zur Betätigung eines der Absperrorgane angreift, und andererseits einen gegen ein lösbares Ende der Schnellverbindung (8) beweglichen Dorn umfaßt. Um eine zuverlässige und sichere Nottrennung bei einfachem Aufbau zu ermöglichen, ist vorgesehen, daß die Betätigungsstange im wesentlichen parallel zur Leitungsachse gegen das lösbare Ende der Schnellverbindung (8) verfahrbar ist und gebildet wird von einer Kolbenstange (24), die durch den Dorn (25) in Richtung auf das lösbare Ende der Schnellverbindung (8) verlängert ist und die Betätigungsstange über eine vorgespannte Feder (27) an dem Hebel (23) angreift.

**Fig. 1**

## Trennkupplung für Rohr-und Schlauchleitungen

Die Erfindung betrifft eine Trennkupplung für Rohr-und Schlauchleitungen mit zwei aneinander gekoppelten Absperrorganen, die über eine einseitig angelenkte Schnellverbindung miteinander verbindbar sind, und einer Betätigungseinrichtung zum Schließen der Absperrorgane und Öffnen der Schnellverbindung zeitlich nacheinander, wobei die Betätigungseinrichtung einerseits einen Zylinder mit einer Betätigungsstange, die an einem Hebel zur Betätigung eines der Absperrorgane angreift, und andererseits einen gegen ein lösbares Ende der Schnellverbindung beweglichen Dorn umfaßt.

Derartige Trennkupplungen werden beim Beladen und Löschen von Tankschiffen verwendet, um nach dem Beladen oder Löschen die auf einem Schiff befestigte Rohr-oder Schlauchleitung von der auf einem Kai montierten Rohr-oder Schlauchleitung abkuppeln zu können. Dabei müssen die Trennkupplungen auch eine Nottrennung während des Lade-oder Löschvorgangs erlauben, damit bei Ausbruch eines Brandes, bei Explosionsgefahr, Leitungsbruch usw. die verbundenen Rohr-oder Schlauchleitungen getrennt und das Schiff notfalls vom Kai ablegen kann.

Um im Falle einer Normal-oder Nottrennung ein Austreten des Beförderungsgutes aus den Rohr-oder Schlauchleitungen an der Trennstelle zu verhindern, müssen die Leitungen vor dem Abkuppeln verschlossen werden.

Eine dementsprechende Trennkupplung der eingangs genannten Art ist aus der GB-A-2 162 270 bekannt. Hierbei sind die Absperrorgane über Zahnsegmente betätigbar, die miteinander in Eingriff stehen und über eine Kolbenstange eines Zylinders betätigbar sind. An einem Zahnsegment befindet sich ein Vorsprung, der zum Sprengen der Trennkupplung für den Notfall dient. Diese Trennkupplung ist nicht genügend zuverlässig, weil zwei verschiedene Angriffspunkte für die zu übertragende Kraft vorhanden sind, um einerseits zu öffnen oder zu schließen, und andererseits die Trennung der Kupplung zu bewirken.

Aus der DE-OS 32 21 372 ist eine Trennkupplung für Rohr-und Schlauchleitungen bekannt, die neben einer Normaltrennung auch eine Nottrennung erlaubt. Dazu weist die Trennkupplung zwei Absperrorgane auf, die über eine einseitig angelenkte Schnellverbindung miteinander verbindbar sind. Die Schnellverbindung besteht dabei aus zwei die Absperrorgane umgreifende Bügel, die an ihrem lösbaren Ende über eine Schraubverbindung miteinander verbunden sind. Zum Schließen der Absperrorgane und Öffnen der Schnellverbindung zeitlich nacheinander umfaßt die Trennkupplung eine zusätzliche Betätigungseinrichtung mit einem Hydraulikzylinder, desen Kolbenstange im wesentlichen parallel zur Leitungsachse gegen das lösbare Ende der Schnellverbindung verfahrbar ist. An dieser Kolbenstange sind zwei Hebel zur Betätigung der beiden Absperrorgane und in Mitmehmer zum Sprengen der Schnellverbindung befestigt. Die Hebel und der Mitnehmer sind dabei in Richtung der Leitungsachse benachbart so zueinander abgeordnet, daß beim Betätigen der Trennkupplung durch Verschieben der Kolbenstange zunächst die Absperrorgane nacheinander verschlossen werden, und dann der Mitnehmer mit der Schraubverbindung in Eingriff treten kann, um die Leitungen voneinander abzukuppeln.

Diese bekannte Trennkupplung ist folglich durch die Notwendigkeit eines zusätzlichen Hydraulikzylinders aufwendig aufgebaut, wodurch sie ein hohes Gewicht besitzt und teuer in der Herstellung ist. Weiterhin erlaubt diese Trennkupplung kein gleichzeitiges Verschließen der Absperrorgane, vielmehr ist aufgrund der Tatsache, daß jedes Absperrorgan mit einem eigenen Hebel verbunden ist, die Betätigung der einzelnen Hebel aufeinander abzustimmen. Dieser Verschlußvorgang ist noch mit der Sprengung der Schnellverbindung abzustimmen, was zur Folge haben kann, daß die Rohr-oder Schlauchleitungen abgekoppelt werden, bevor die Absperrorgane die Leitungen vollkommen verschlossen haben.

Aufgabe der Erfinding ist es daher, eine Trennkupplung für Rohr-und Schlauchleitungen der eingangs genannten Art zu schaffen, die neben einer Normaltrennung eine zuverlässige und sichere Nottrennung erlaubt und dabei einfach aufgebaut und billig herstellbar ist.

Diese Aufgabe wird dadurch gelöst, daß die Betätigungsstange im wesentlichen parallel zur Leitungsachse gegen das lösbare Ende der Schnellverbindung verfahrbar ist und gebildet wird von einer Kolbenstange, die durch den Dorn in Richtung auf das lösbare Ende der Schnellverbindung verlängert ist und die Betätigungsstange über eine vorgespannte Feder an dem Hebel angreift.

Hierdurch wird erreicht, daß die beiden Absperrorgane die Rohr-und Schlauchleitungen gleichzeitig verschließen und die Trennungsphase erst dann beginnt, wenn die zu trennenden Leitungen keinen Durchfluß des Beförderungsgutes mehr erlauben. Die Trennung der Leitungen ist sogar unmöglich, solange die Absperrorgane nicht geschlossen sind. Weiterhin sind die Normal-und Nottrennung mit einer Betätigungseinrichtung durchführbar. Der Zahnradantrieb erleichtert zudem die Remontage der Trennkupplung nach einer Trennung, wobei die Zahnräder das Tennungssystem nicht stören.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.

Fig. 1 zeigt teilweise geschnitten eine Seitenansicht einer Trennkupplung.

Fig. 2 bis 4 zeigen die Trennkupplung gemäß Fig. 1 in verschiedenen Phasen während eines Trennvorganges.

Fig. 5 zeigt teilweise geschnitten eine Seitenansicht einer Betätigungseinrichtung der Trennkupplung gemäß Fig. 1.

Fig. 6 and 7 zeigen in einer teilweise geschnittenen Seitenansicht weitere Ausführungsformen der Betätigungseinrichtung der Trennkupplung gemäß Fig. 1.

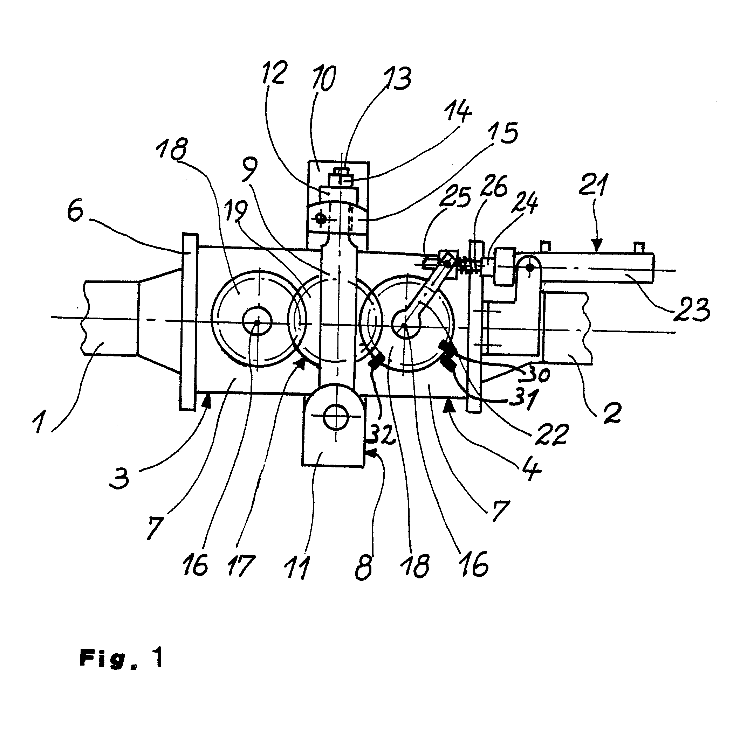

Die in Fig. 1 dargestellte Trennkupplung umfaßt zwei an Rohr-oder Schlauchleitungen 1, 2 anflanschbare Absperrorgane 3, 4, die als Ventile ausgebildet sind und jeweils ein mit konischen Flanschen 5, 6 versehenes Gehäuse 7 aufweisen. Zum dichten Verbinden der beiden Absperrorgane 3, 4 ist eine Schnellverbindung 8 vorgesehen, die zwei Bügel 9 und 10 umfaßt. Die beiden Bügel 9, 10 sind über ein Gelenk 11 einerseits und über eine Schraubverbindung 12 andererseits miteinander verbunden und weisen an ihrer Innenseite konische Preßflächen komplentär zu den konischen Flanschen 5 auf. Hierdurch werden beim Anziehen der Schraubverbindung 12 die konischen Flansche 5 gegeneinander gepresst. Die Schraubverbindung 12 ist an dem Bügel 9 angeordnet und umfaßt einen Schraubbolzen 13 mit einer Mutter 14. Zur Aufnahme dieser Schraubverbindung 12 besitzt der Bügel 10 ein Maul 15. Gegen dieses Maul 15 kann die Mutter 14 der Schraubverbindung 12 gespannt werden, so daß die Bügel 9 und 10 die Gehäuse 7 fest umgreifen und damit dicht aneinander pressen.

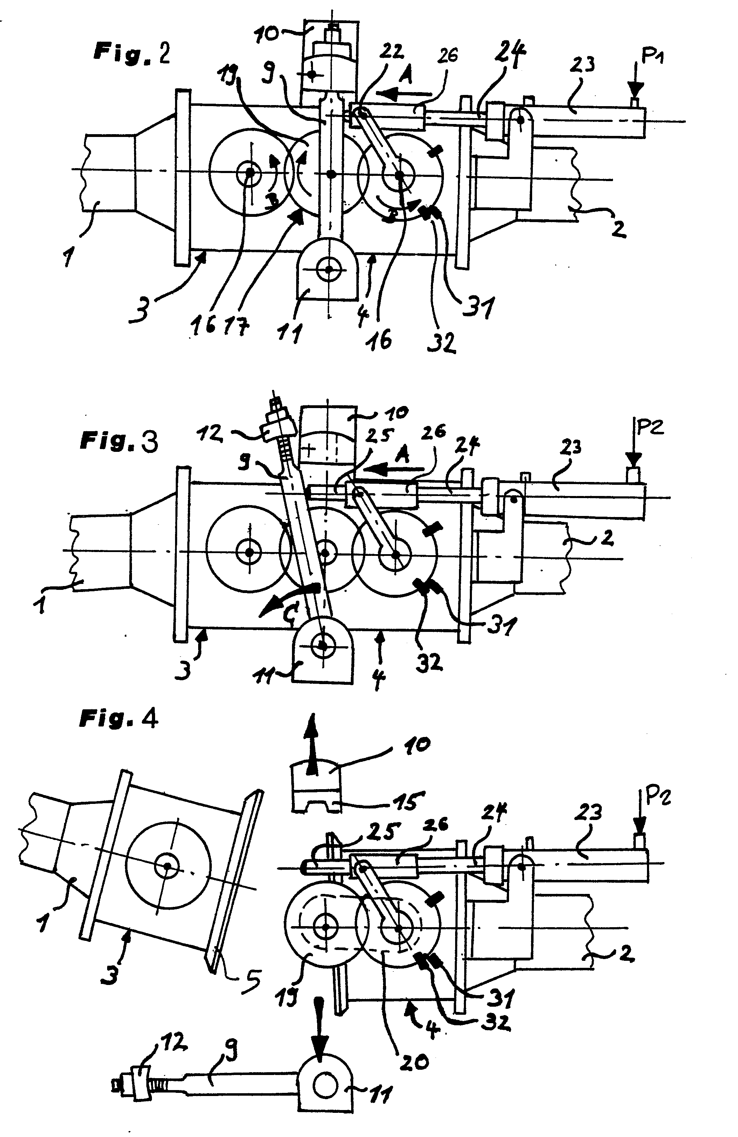

Über Betätigungswellen 16 sind die beiden Absperrorgane 3, 4 zwischen einer geöffneten und einer geschlossenen Stellung verschwenkbar. Zur gleichzeitigen Betätigung der Betätigungswellen 16 ist ein Zahnradantrieb 17 vorgesehen, der die Betätigungswellen 16 miteinander koppelt. Dieser Zahnradantrieb 17 umfaßt jeweils ein an den Betätigungswelle 16 befestigtes Zahnrad 18 und ein Übertragungszahnrad 19, das zwischen den beiden Zahnrädern 18 angeordnet ist und mit diesen in Eingriff steht. Zur Halterung des Übertragungszahnrades 19 ist ein Haltebügel 20 (Fig. 4) vorgesehen, der das Übertragungszahnrad 19 an dem Absperrorgan 4 befestigt. Eine entsprechende Befestigung an dem Absperrorgran 3 ist ebenfalls möglich. Die beiden Zahnräder 18 weisen gleiche Zahnungen auf, damit das in diese Zahnungen eingreifende Übertragungszahnrad eine synchrone Betätigung der Betätigungswellen 16 bewirkt, wenn auf eine der Betätigungswellen 16 ein Drehmoment einwirkt.

Zur Kopplung der Absperrorgrane 3, 4 an eine Betätigungseinrichtung 21 ist ein Hebel 22 vorgesehen, der einerseits an der Betätigungswelle 16 des Absperrorgans 4 befestigt ist und andererseits an die Betätigungseinrichtung 21 angreift. Die Betätigungseinrichtung 21 schwenkt den Hebel 22 um das an der Betätigungswelle 16 befestigte Ende, wobei der Schwenkbereich so gewählt ist, daß der Hebel 22 eine Drehung der Betätigungswelle 16 bewirkt, die die Absperrorgane 3, 4 zwischen der geöffneten und der geschlossenen Stellung verfährt. Der Hebel 22 wird hierzu vorzugsweise um ca. 90° geschwenkt. Zur Begrenzung des Schwenkbereiches sind Arretierungseinrichtungen 30, 31 und 32 vorgesehen. Diese sind hier als Arretierungsstifte ausgebildet, wobei die Arretierungsstifte 30 und 32 an dem Zahnrad 18 des Absperrorgans 4 befestigt sind, während der Arretierungsstift 31 fest an dem Absperrorgan 4 angeordnet ist. In Wirkverbindung definieren die Arretierungsstifte 30 und 31 die geöffnete Stellung der Absperrorgane 3, 4 und durch Wirkverbindung der Arretierungsstifte 31 und 32 wird die geschlossene Stellung der Absperrorgane 3, 4 definiert.

Die Betätigungseinrichtung 21 umfaßt einen drehbar gelagerten Hydraulikzylinder 23, dessen Kolbenstange 24 sich im wesentlichen parallel zur Leitungsachse erstreckt. Die Kolbenstange 24, die als Betätigungsstange für den Hebel 22 und die Schnellverbindung 8 dient, weist an dem dem Hydraulikzylinder 23 gegenüberliegenden Ende einen Dorn 25 auf, der über eine Federvorspanneinrichtung 26 eine Verlängerung der Kolbenstange 24 darstellt. Die Kolbenstange 24, der Dorn 25 und die Federvorspanneinrichtung 26 bilden somit die Betätigungsstange, die im wesentlichen parallel zur Leitungsachse verschiebbar ist.

Zur Betätigung der Betätigungsstange ist der Hydraulikzylinder 23 mit unterschiedlichen Drücken P1 und P2 beaufschlagbar. In einer ersten Position der Betätigungsstange wird die Kolbenstange 24 weitgehend vom Zylinder 23 aufgenommen, so daß der Hebel 22 in eine Stellung verschwenkt ist, bei der die Arretierungsstifte 30, 31 miteinander in Eingriff stehen und damit die Absperrorgane 3, 4 sich in der geöffneten Stellung befinden. Bei Beaufschlagung des Hydraulikzylinders 23 mit dem Druck P1 wird die Kolbenstange 24 aus dem Hydraulikzylinder 23 herausgedrückt und verschwenkt dabei den Hebel 22 im wesentlichen in einer Richtung A, wodurch beide Betätigungswellen 16, gekoppelt durch den Zahnradantrieb 17, gedreht werden, bis die Arretierungsstifte 31, 32 miteinander in Eingriff stehen und die Absperrorgane 3, 4 in die geschlossene Stellung bewegt sind. Die Vorschubbewegung der Kolbenstange 24 bei dem Druck P1 führt somit zu einem Verschließen der Absperrorgane 3, 4 ohne daß der Dorn 25 mit der Schnellverbindung 8 in Eingriff tritt. Eine derartige Begrenzung der Vorschubbewegung wird durch die Arretierungsmittel 30, 31, 32 sichergestellt.

Bei Beaufschlagung des Hydraulikzylinders 23 mit dem Druch P2, der höher ist als der Druck P1, verfährt die Kolbenstange 24 die Betätigungsstange wiederum in die erste Position, da die Schwenkbewegung des Hebels 22 durch die Eingriffstellung der Arretierungsstifte 31, 32 begrenzt ist. Der Druck P2 bewirkt aber zusätzlich, daß die Kolbenstange 24 eine Feder 27 der Federvorspanneinrichtung· 26 zusammendrückt und dadurch den Dorn 25 in Richtung A verlängert, so daß dieser mit der Schnellverbindung in Eingriff treten kann.

Der Dorn 25 kann dabei mit einer solchen Kraft gegen den Bügel 9 der Schnellverbindung 8 gestoßen werden, daß die Schraubverbindung 12 aus dem Maul 15 herausgesprengt wird.

Anhand der Fig. 2 bis 4 werden nachstehend verschieden Phasen eines Trennvorganges beschrieben. Fig. 2 zeigt die vorbeschriebene Trennkupplung bei der Beaufschlagung des Hydraulikzylinders 23 mit einem Druck P1. Bei einer derartigen Druckbeaufschlagung wird die Kolbenstange 24 mit der Federvorspanneinrichtung 26 und dem Dorn 25 im wesentlichen in Richtung A verschoben, so daß der Hebel 22, der an der Betätigungsstange angreift, die Betätigungswelle 16 des Absperrorgans 4 in Richtung B dreht. Entsprechend dieser Drehung bewegt sich das angekoppelte Zahnrad 18 des Absperrorgans 3, da das Übertragungszahnrad 19 eine entsprechende und gleichzeitige Drehung in Richtung B des Zahnrades 18 des Absperrorgans 3 bewirkt. Die Drehung ist so groß, daß die Absperrorgane 3, 4 von der geöffneten Stellung in die geschlossene Stellung überführt werden, d.h. die Arretierungsstifte 31, 32 werden miteinander in Eingriff gebracht. Die Schnellverbindung 8 preßt dabei die Gehäuse 5 noch fest aneinander. Bei Beaufschlagung des Hydraulikzylinders 23 mit einem Druck P1 wird folglich nur ein Verschließen der Absperrorgane 3, 4 erreicht.

In Figur 3 wird der Hydraulikzylinder 23 mit einem Druck P2 beaufschlagt, wobei P2 größer ist als P1. Da der Hebel 22, bedingt durch die Arretierungsstifte 31, 32, sich nicht weiter im wesentlichen in Richtung A schwenken läßt, bewirkt dieser erhöhte Druck P2 eine Bewegung der Kolbenstange 24 in Richtung A entgegen der Federvorspannung der Feder 27, woduch die Feder 27 komprimiert wird und damit der Dorn 25 aus der Federvorspanneinrichtung 26 herausgedrückt wird. Der Dorn 25 wird folglich in Richtung A verlängert und gegen den Bügel 9 gestoßen. Dieser Stoß erfolgt mit einer solchen Kraft, daß die Schnellverbindung 8 gesprengt wird. Geführt durch das Gelenk 11 schwenkt der Bügel 9 in Richtung C und löst die dichte Verbindung der Absperrorgane 3 und 4. Die Beaufschlagung des Hydraulikzylinders 23 mit einem Druck P2 führt somit nach dem Verschließen der Absperrorgane 3, 4 zu einer Trennung derselben.

Eine derartige Trennkupplung, bei der der Hydraulikzylinder 23 zunächst mit einem Druck P1 und dann einem Druck P2 oder direkt mit einem Druck P2 beaufschlagbar ist, erlaubt also eine Normaltrennung und eine zuverlässige Nottrennung mit vorherigem Verschließen der Absperrorgane 3, 4.

Fig. 4 zeigt, wie sich die Absperrorgane 3 und 4 bei abgeklapptem Bügel 9 voneinander trennen, indem sich das Absperrorgan 3 mit der angeflanschten Rohr-oder Schlauchleitung 1 aus der Kupplungsstellung entfernt und ·der Bügel 10 zudem von der Kupplungsstelle entfernbar ist.

Gemäß der dargestellten Phasen erfolgt die Trennung der Rohrleitungen 1 und 2 als Abfolge - gleichzeitiges Verschließen der Absperrorgane 3 und 4, Lösen der Schnellverbindung 8 -. Durch die direkte Beaufschlagung mit einem Druck P 2 kann zudem die Kraft eingestellt werden, die zur Sprengung der Schnellverbindung 8 im Falle einer Nottrennung erforderlich ist.

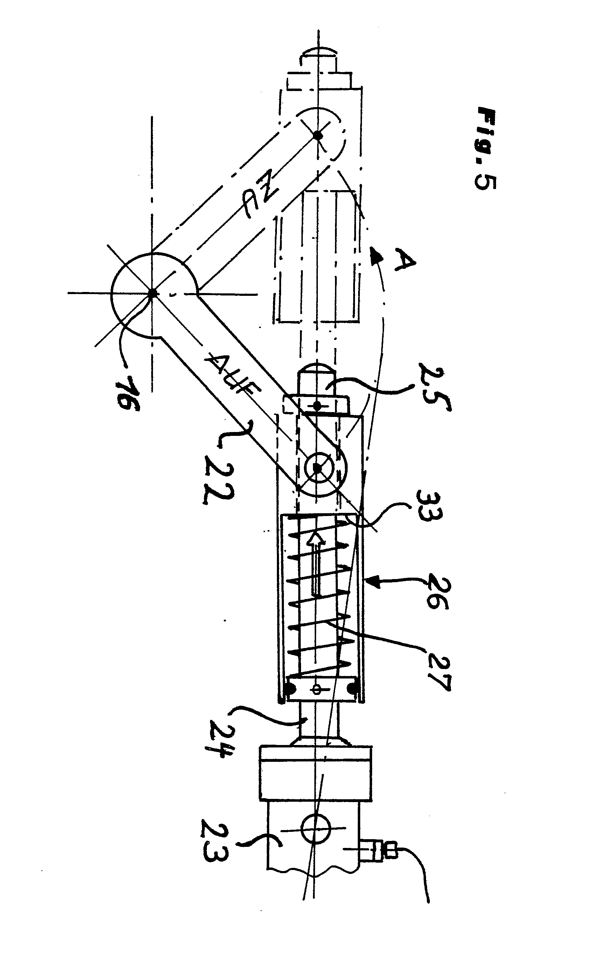

Fig. 5 zeigt gegenüber Fig. 1 die Betätigungseinrichtung 21 in einem vergrößerten Maßstab, wobei die Bewegungsrichtung A der Betätigungsstange genauer angezeigt ist. Die Kolbenstange 24 des Hydraulikzylinders 23 endet stempelartig ausgebildet in der Federvorspanneinrichtung 26 und ist in dieser axial beweglich geführt. An das stempelartige Ende der Kolbenstange 24 ist der Dorn 25 befestigt, der eine Verlängerung der Kolbenstange 24 in der Federvorspanneinrichtung 26 darstellt und aus dieser an dem dem Hydraulikzylinder 23 abgewandten Ende herausragt. Ein maximaler Austritt des Dorns 25 aus der Federvorspanneinrichtung 26 ist dann gegeben, wenn die Feder 27, die sich einerseits an dem stempelartigen Ende der Kolbenstange 24 und andererseits an einer Schulter 33 der Federvorspanneinrichtung 26 abstützt, vollständig durch die Kolbenstange 24 komprimiert ist. Bei Beaufschlagung des Hydraulikzylinders 23 mit dem Druck P1 bewegt sich die Kolbenstange 24 aus dem Zylinder 23 in Richtung A und bewegt den Hebel 22 in die geschlossene Stellung der Absperrorgane 3, 4 ohne die Feder 27 zu komprimieren. Bei Beaufschlagung des Hyudraulikzylinders 23 mit einem höheren Druck, z.B. P2, ist eine weitere Schwenkbewegung des Hebels 22 aufgrund der Arretierungsstifte 31, 32 nicht möglich, so daß der Hebel 22, der an der Federvorspanneinrichtung 26 befestigt ist, die Federvorspanneinrichtung 26 und damit die Schulter 23 arretiert.

Gegen diese feststehende Schulter 23 komprimiert die Kolbenstange 24 aber bei dem höheren Druck die Feder 27 und verschiebt den Dorn 25 in Pfeilrichtung, wodurch die Schnellverbindung 8 gesprengt werden kann.

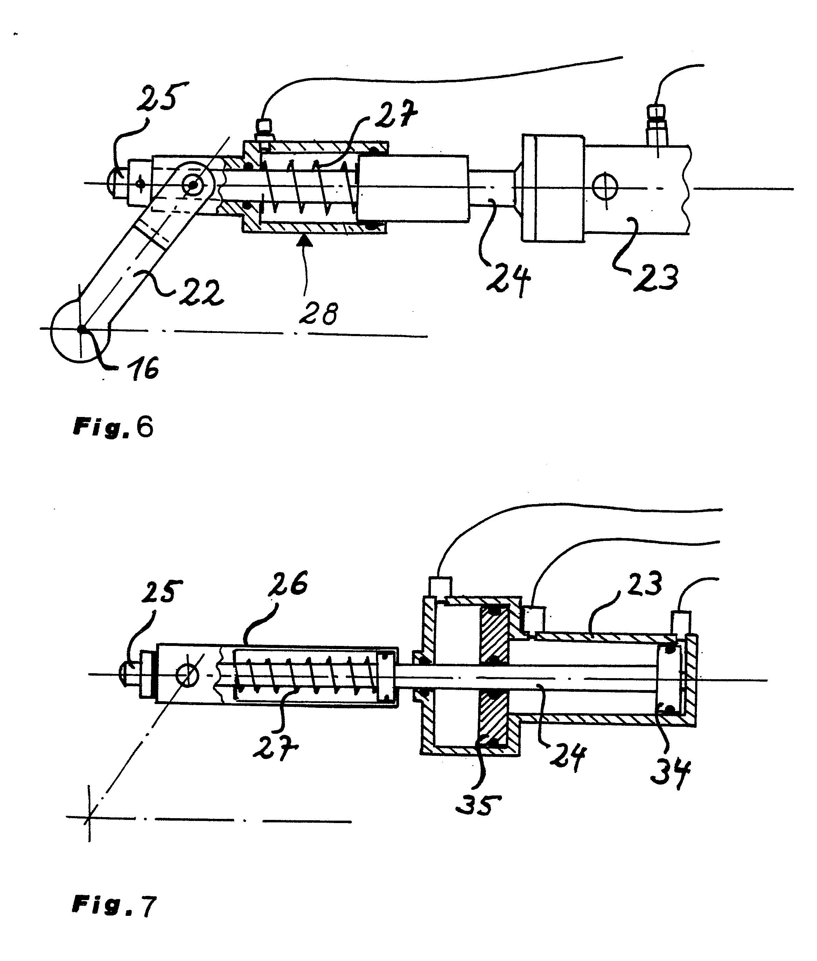

Die Fig. 6 und 7 zeigen weitere Ausführungsformen der Betätigungseinrichtung 21. Gemäß Fig. 6 ist als Federvorspanneinrichtung 26 ein Hydraulikzylinder 28 vorgesehen. Fig. 7 zeigt einen speziell ausgebildeten Hydraulikzylinder 23, bei dem stempelartige Ausbildungen 34, 35 der Kolbenstange 24 bei Beaufschlagung mit unterschiedlichen Drücken verschiedene Kolbenhübe bedingen.

## Ansprüche

1. Trennkupplung für Rohr-und Schlauchleitungen (1, 2) mit zwei aneinander geköppelten Absperrorganen (3, 4), die über eine einseitig abgelenkte Schnellverbindung (8) miteinander verbindbar sind, und einer Betätigungseinrichtung (21) zum Schließen der Absperrorgane (3, 4) und Öffnen der Schnellverbindung (8) zeitlich nacheinander, wobei die Betätigungseinrichtung (21) einerseits einen Zylinder (23) mit einer Betätigungsstange, die an einem Hebel (22) zur Betätigung eines der Absperrorgane angreift, und andererseits einen gegen ein lösbares Ende der Schnellverbindung (8) beweglichen Dorn (25) umfaßt, dadurch gekennzeichnet, daß die Betätitungsstange im wesentlichen parallel zur Leitungsachse gegen das lösbare Ende der Schnellverbindung (8) verfahrbar ist und gebildet wird von einer Kolbenstange (24), die durch den Dorn (25) in Richtung auf das lösbare Ende der Schnellverbindung (8) verlängert ist und die Betätigungsstange über eine vorgespannte Feder (27) an dem Hebel (22) angreift.

2. Trennkupplung nach Anspruch 1, dadurch gekennzeichnet, daß der Hebel (22) über einen Zahnradantrieb (17) mit einem der Absperrorgane (3) gekoppelt ist.

3. Trennkupplung nach Anspruch 2, dadurch gekennzeichnet, daß als Zahnradantrieb (17) Zahnräder (18) vorgesehen sind, die über ein Übertragungszahnrad (19) miteinander in Eingriff stehen, wobei jedes Absperrorgan (3, 4) jeweils über ein Zahnrad (18) antreibbar ist.

4. Trennkupplung nach Anspruch 3, dadurch gekennzeichnet, daß das Übertragungszahnrad (19) in einem der Absperrorgane (3, 4) befestigt ist.

5. Trennkupplung nach einem der Ansprüche 1 bis 4, dadurch gekennzeichnet, daß der Zylinder (23) mit einem Druck P1, der die Kolbenstange (24) in die zweite Position verschiebt, und mit einem Druck P2, der den Dorn (25) gegen das lösbare Ende der Schnellverbindung (8) mit einer zum Lösen der Schnellverbindung ausreichenden Kraft verfährt, beaufschlagbar ist.

0 287 046

Fig. 1

Fig. 2

Fig. 3

Fig. 4

Fig. 5

AZ

A

16

AUF

22

25

33

26

27

24

23

Fig. 6

Fig. 7